# EUROPÄISCHE PATENTSCHRIFT

(11) **EP 1 198 348 B1**
(45) Veröffentlichungstag und Bekanntmachung des Hinweises auf die Patenterteilung: **25.02.2004**
(21) Anmeldenummer: 00949373.5
(22) Anmeldetag: 19.07.2000
(51) Int. Cl.: B32B 27/36, B32B 31/00, C08J 9/232

(54) **VERFAHREN ZUR HERSTELLUNG EINES WERKSTOFFVERBUNDES, DANACH HERGESTELLTER WERKSTOFFVERBUND, FORMTEIL AUS EINEM SOLCHEN WERKSTOFFVERBUND UND VERFAHREN ZU DESSEN HERSTELLUNG**
METHOD OF PRODUCING A COMPOSITE MATERIAL, COMPOSITE MATERIAL PRODUCED ACCORDING TO SAID METHOD, MOLDED ARTICLES THAT CONSIST OF SUCH A COMPOSITE MATERIAL AND METHOD FOR THE PRODUCTION THEREOF
PROCEDE POUR PRODUIRE UN MATERIAU COMPOSITE, MATERIAU COMPOSITE AINSI PRODUIT, PIECE MOULEE CONSTITUEE DE CE DERNIER ET PROCEDE DE PRODUCTION DE LADITE PIECE MOULEE

(30) Priorität: 23.07.1999 DE 19934692; 10.03.2000 DE 10011331
(43) Veröffentlichungstag der Anmeldung: 24.04.2002
(73) Patentinhaber: Fraunhofer-Gesellschaft zur Förderung der angewandten Forschung e.V., 80686 München (DE)
(72) Erfinder: ZIEGLER, Maik, D-76327 Pfinztal (DE); HOFMANN, Knut, D-75015 Bretten (DE)
(86) Internationale Anmeldenummer: PCT/EP2000/006881
(87) Internationale Veröffentlichungsnummer: WO 2001/007251

(56) Entgegenhaltungen:
- EP-A- 0 442 759
- EP-A- 0 626 255
- DATABASE WPI Section Ch, Week 199016 Derwent Publications Ltd., London, GB; Class A18, AN 1990-121431 XP002150555 & JP 02 073836 A (NIPPON STYRENE PAPER KK) , 13. März 1990 (1990-03-13) in der Anmeldung erwähnt

## Beschreibung

Die Erfindung betrifft ein Verfahren zur Herstellung eines Werkstoffverbundes aus einem Partikelschaum aus einem thermoplastischen Kunststoff und wenigstens einer mit diesem verbundenen Schicht, indem die vorgeschäumten Partikel auf eine Temperatur im Bereich der Schmelztemperatur erhitzt und währenddessen oder danach mit der Schicht verbunden werden. Ferner betrifft die Erfindung einen nach diesem Verfahren hergestellten Werkstoffverbund, bestehend aus einem Partikelschaum und wenigstens einer mit diesem verbundenen Schicht sowie Formteile aus einem solchen Werkstoffverbund und Verfahren zu deren Herstellung.

Thermoplastische Kunststoffe und hieraus durch Expansion hergestellte Kunststoffschäume, insbesondere Partikelschäume, finden vielfältige Verwendung. Kunststoffschäume werden zumeist als Isolationsschicht gegen Wärme, Schall oder Stoß und aus Gründen der Gewichtseinsparung gegenüber Kompaktmaterialien eingesetzt. Sie nehmen jedoch nur in begrenztem Maß Kräfte auf und sind zumeist auch nicht abriebfest und nicht diffusionsdicht. In den meisten Anwendungsfällen muß daher der Kunststoffschaum zumindest einseitig beschichtet oder vollständig umhüllt werden, wobei der Schicht- bzw. Hüllwerkstoff je nach Anwendung z.B. eine glatte, gegebenenfalls dekorative eine abriebfeste oder dichte Oberfläche liefern und/oder dem Formteil eine erhöhte Festigkeit verleihen soll. Der Deck- bzw. Hüllwerkstoff kann zu diesem Zweck beispielsweise eine Faserverstärkung aufweisen. Solche Werkstoffverbunde werden in technischen Bauteilen, z.B. als Verkleidungsteile in der KFZ-Technik, für Gehäuse, Verpackungen oder dergleichen, eingesetzt.

Bei solchen Verbundwerkstoffen wird z.B. der Kunststoffschaum nach seiner Herstellung und Formbildung mit einer Deckschicht durch Kleber, Lösungsmittel od. dgl. verbunden. Weiterhin ist es bekannt, die Deckschicht vorzufertigen und anschließend mit den Schaumpartikeln zu hinterschäumen. Das erste Verfahren ist aufwendig und in der Regel wenig umweltverträglich. Bei Beanspruchungen kann es zu Delaminierungen kommen. Bestehen der Kunststoffschaum und die Deckschicht aus verschiedenen Polymeren, so fehlt es häufig an einer innigen Verbindung zwischen Deckschicht und Kunststoffschaum. Bei entsprechender Beanspruchung kann die Deckschicht delamieren oder reißen und dadurch der Kunststoffschaum desintegriert werden oder die Schaumstruktur unter Umständen sogar zerfallen.

Es sind Verbundwerkstoffe aus Polyurethanschäumen mit aufkaschierten, z.B. auflaminierten oder geklebten Dekorfolien aus Polyurethan oder Polyvinylchlorid (PVC) bekannt. Nachteilig ist, daß Polyurethane aufgrund ihrer duroplastischen Eigenschaften nur bedingt recyklierbar sind und daher entweder thermisch verwertet oder in aufwendigen und teuren Verfahren granuliert werden müssen, um das Granulat zu meist minderwertigeren Produkten zu verarbeiten. Besteht die Dekorfolie aus PVC, so ist ein Recycling aufgrund mangelnder Sortenreinheit noch schwieriger und auch die thermische Verwertung aufgrund des Chlorgehalts problematisch. Bei der thermischen Verwendung PVC-haltiger Kunststoffe bilden sich polychlorierte Dibenzodioxine und -furane; beispielhaft sei das als "Seveso-Gift" bekannt gewordene 2,3,7,8-Tetrachlordibenzodioxin genannt, welches die höchste Toxizität der gegenwärtig bekannten organischen Verbindungen aufweist.

Die DE 37 22 873 beschreibt ein Verfahren zur Herstellung eines Ausstattungsteils, insbesondere eines Verkleidungsteils für Kraftfahrzeuge, mit einer dünnwandigen Trägerschicht, einer Zwischenschicht und einer Dekorschicht, wobei die Trägerschicht mit dem Kunststoffschaum verschmolzen und die Dekorschicht insbesondere durch Flammkaschieren mit dem Kunststoffschaum verpreßt oder auf übliche Weise aufkaschiert wird. Der Kunststoffschaum besteht aus Polyethylen und die Trägerschicht aus Blech oder aus einem Polypropylen enthaltenden Faservlies bzw. einem Polypropylen enthaltenden Glasfasermaterial. Polyolefin-Schäume weisen eine nur mangelhafte Wärmeformbeständigkeit auf und sind nur bis etwa 100°C bis 110°C formstabil. Für viele Formteile, die beispielsweise Sonneneinstrahlung, Heißluft oder Abwärme ausgesetzt sind, reicht dies nicht aus. Dies gilt insbesondere auch für die Automobilindustrie, die eine Wärmeformbeständigkeit bis mindestens 120°C fordert.

Der DE 41 41 113 A1 ist ein Verbundkörper in Form eines KFZ-Verkleidungsteils entnehmbar, welcher aus einem Polyolefin-Partikelschaum und einer auf diesen aufkaschierten Dekorschicht aus gleichfalls polyolefinischen Polymeren besteht. Die Dekorschicht weist ein mehrlagiges Gewirke oder Gewebe mit eingewirkten Abstandhaltern aus Polymerfäden und entweder eine dekorative textile Oberfläche auf, oder die Dekorschicht ist mit einer auflaminierten Folie auf der Basis olefinischer Polymere beschichtet. Dieser Werkstoffverbund ist zwar sortenrein, aber gleichfalls von mangelhafter Wärmeformbeständigkeit.

Der Erfindung liegt die Aufgabe zugrunde, ein Verfahren zur Herstellung eines umweltfreundlichen Werkstoffverbundes mit einem festen Verbund zwischen dem Partikelschaum und der mit diesem verbundenen Schicht und einer erhöhten Temperaturbeständigkeit und Temperaturwechselfestigkeit Die Aufgabe ist ferner auf solche Werkstoffverbunde, auf Formteile aus einem solchen Werkstoffverbund und auf Verfahren zur Herstellung derartiger Formteile gerichtet.

Diese Aufgabe wird erfindungsgemäß dadurch gelöst, daß ein Partikelschaum aus Polyalkylenterephthalat oder einem Blend aus Polyalkylenterephthalat mit einem niedrigen Kristallitanteil in ansonsten amorpher Phase eingesetzt wird, und daß der Partikelschaum bei der Bildung des Formkörpers bzw. des Verbundes mit der Schicht und/oder anschließend daran bei einer die amorphen Phase in einen höheren Gesamt-Kristallitanteil umwandelnden Temperatur getempert wird.

Es ist zwar bekannt (JP 20 73 836 A), Schaumpartikel zusammen mit einem Granulat aus einem Polymer mit niedrigerem Schmelzpunkt auf einen Extruder aufzugeben, dessen Temperatur so geführt ist, das nur das Granulat erschmolzen wird. Die Mischung aus Polymerschmelze und Schaumpartikeln wird dann in eine Spritzgießform überführt. Der Formkörper besteht also aus einer Polymermatrix mit eingebetteten Schaumpartikeln. Unter der Vielzahl der angegebenen Polymere ist auch PET genannt, ohne daß hierfür irgendwelche Auswahlkriterien angegeben sind.

Die Erfindung nutzt zunächst die höhere Temperaturbeständigkeit und Temperaturwechselfestigkeit der Polyalkylenterephthalate, insbesondere des PET, deren Schmelzpunkt im Bereich von 250°C und deren Erweichungspunkt im Bereich von 200°C liegt. Diese relativ hohen Temperaturen erfordern allerdings bei der Herstellung des Formköpers aus dem Partikelschaum einen entsprechend hohen Energieeinsatz. Beispielsweise bedeutet dies bei der herkömmlichen Formkörperherstellung durch Heißdampf, daß ein Dampfdruck von mehr als 16 bar erforderlich ist. Der notwendige Energieeinsatz ist also erheblich. Ferner sind entsprechende konstruktive Maßnahmen an der Formeinrichtung notwendig, um dieser die notwendige Druckdichtheit, insbesondere in der Trennebene zu verleihen. Die Formwerkzeuge selbst müssen entsprechende Wandstärken aufweisen. Dabei steigen nicht nur die Investitionskosten, sondern wird der Energieaufwand aufgrund der hohen Wärmekapazität der Formeinrichtung weiter erhöht. Praktische Versuche haben gezeigt, daß ca. 95 % des Energieeinsatzes auf die Aufheizung der Formeinrichtung entfallen, so daß eine wirtschaftliche Formteilherstellung nicht zu realisieren ist.

Bei dem erfindungsgemäßen Verfahren wird das geschäumte oder vorgeschäumte Polyalkylenterephthalat in einer Konfiguration mit niedrigem Kristallitanteil in einer ansonsten amorphen Phase eingesetzt, dessen Erweichungstemperatur nennenswert unterhalb der Erweichungstemperatur von Polyalkylenterephthalaten in den herkömmlichen Verwendungsformen liegt. Ein solches Polyalkylenterephthalat mit geringem Kristallitanteil weist allerdings nicht die für den fertigen Formkörper bwz. das Formteil erwünschten Werkstoffeigenschaften auf. Es hat sich gezeigt, daß durch ein Tempern des Partikelschaum-Formkörpers während oder nach seiner Herstellung der Kristallitanteil aus der amorphen Phase heraus beträchtlich erhöht werden kann, so daß der Partikelschaum im Rahmen des Werkstoffverbundes die üblichen gewünschten Eigenschaften aufweist. Das Verbinden der Partikel läßt sich auf diese Weise mit geringerem Energieaufwand und Investitionskosten verwirklichen. Es können herkömmliche Formteilautomaten auch zur Verarbeitung von Partikelschäumen aus Polyalkylenterephthalaten eingesetzt werden.

Wird der Partikelschaum mit Heißdampf unter Druck zu dem Formkörper gebildet, so kann der Druck und die Druckhaltezeit gesteuert werden, um den Partikelschaum zu tempern.

Es ist ferner möglich, den Werkstoffverbund nach der Erzeugung des Formkörpers weiter zu tempern, beispielsweise durch ein langsames und/oder gesteuertes Abkühlen, wobei der Wärmeinhalt im Inneren des Formkörpers genutzt wird. Es kann insbesondere der Werkstoffverbund unmittelbar nach Erreichen der erforderlichen Formstabilität an der Oberfläche aus der Form entnommen und anschließend langsam ausgekühlt werden.

Die zum Tempern notwendige Temperaturführung zur Erzeugung eines möglichst hohen Kristallitanteils kann durch eine herkömmliche DSC-Messung während das Prozesses oder an Prototypen gesteuert werden.

Ein nach dem erfindungsgemäßen Verfahren hergestellter Werkstoffverbund aus einem Formkörper aus einem Partikelschaum und wenigstens einer mit dem Formkörper verbundenen Schicht zeichnet sich dadurch aus, daß der Partikelschaum aus einem Polyalkylenterephthalat oder einem Blend aus Polyalkylenterephthalaten besteht.

Der Polyalkylenterephthalat-Partikelschaum des erfindungsgemäßen Werkstoffverbund weist eine außergewöhnlich hohe Zug- und Scherfestigkeit auf. Gegenüber anderen Partikelschäumen, insbesondere den meist gebräuchlichen Polystyrolschäumen, zeichnet er sich durch sein hohes Rückstellvermögen aus, so daß bleibende Druckstellen vermieden werden. Er weist insbesondere gegenüber Polyolefin-Partikelschäumen eine erhöhte Wärmeformbeständigkeit auf und ist bei Temperaturen bis wenigstens 120°C stabil. Polyalkylenterephthalate, wie Polyethylenterephthalate (PET), Polypropylenterephthalate, Polybutylenterephthalate, Poly(1,4-cyclohexandimethylenterephthalat)e od. dgl., sind thermoplastische Polymere mit hoher Festigkeit, Steifigkeit und Formstabilität, guten Gleit- und Verschleißeigenschaften sowie hoher Chemikalienbeständigkeit. Aufgrund seiner thermoplastischen Eigenschaften ist der Polyalkylenterephthalat-Partikelschaum leicht recycelbar und somit umweltfreundlich. Auch bei einer thermischen Entsorgung desselben entstehen keine toxischen halogenierten Kohlenwasserstoffe.

Der Partikelschaum besteht bevorzugt aus PET, da PET aufgrund der teilkristallinen Struktur seiner Molekülketten eine besonders hohe Festigkeit und Dichte (D ≈ 1,38 g/cm³) und einen hohen Schmelzpunkt von etwa 260°C aufweist. Die teilkristallinen Strukturen und somit die Werkstoffeigenschaften von PET sind durch Copolymerisation mit höheren Terephthalsäureestern oder z.B. Isophthalsäure modifizierbar.

Zur Erhöhung der Festigkeit und insbesondere der Zähigkeit des Verbundwerkstoffes kann der Partikelschaum synthetische und/oder natürliche Verstärkungsfasern, z.B. Glas-, Metall-Carbon-, Aramid-, Holz-, Cellulose-, Hanffasern etc. aufweisen. Die Verstärkungsfasern sind vorzugsweise sowohl inter- als auch intrapartikulär angeordnet.

Der erfindungsgemäße Werkstoffverbund läßt sich in Platten oder als dreidimensionales Formteil, gegebenenfalls auch als Hohlkörper, beispielsweise durch Aufformen des Verbundwerkstoffes auf einen Kern, herstellen. Der erfindungsgemäße Werkstoffverbund ist deshalb in besonderem Maß geeignet für Formteile für Innenverkleidungen, Motorraumteile und Karosserieteile von Kraftfahrzeugen, z.B. Türinnenverkleidungen, Sonnenblenden, Instrumententafeln, Armaturenbretter, Cockpitmodule, Motorraumauskleidungen, Stoßfänger, Fronthauben, Frontendträger, etc., für Möbel, insbesondere Gartenmöbel, für Sportgeräte, wie Surfbretter, Wellengleiter, Bootskörper, für Verpackungen, Isolationsbehälter oder Gehäuse oder für den Modellbau.

Je nach Verwendung des fertigen Formteils ist die mit dem Partikelschaum verbundene Schicht als eine eine Sichtseite bildende Deckschicht ausgestaltet, welche dem Verbundwerkstoff eine glatte oder strukturierte, dekorative Oberfläche und eine erhöhte Spritz-, Kratz- und Abriebfestigkeit verleiht. Die Deckschicht kann beispielsweise eine aus wenigstens einem thermoplastischen Polymer, z.B. eine Polyolefin-Folie sei, die insbesondere für eine glatte Oberfläche des Verbundkörpers sorgt. Die Deckschicht kann z.B. auch eine textile Struktur aufweisen, um dem Verbundkörper insbesondere für Innenverkleidungsteile von Kraftfahrzeugen eine gewünschte Optik und Haptik und beispielsweise eine Oberflächenstruktur zu verleihen.

In bevorzugter Ausführung besteht die Deckschicht aus Polyalkylenterephthalat, insbesondere PET, oder einem Blend aus Polyalkylenterephthalaten. In diesem Fall ist der erfindungsgemäße Werkstoffverbund aufgrund seiner Sortenreinheit und seiner thermoplastischen Eigenschaften einerseits vollständig recyklierbar und umweltfreundlich, andererseits ist zwischen dem Partikelschaum und der Deckschicht aufgrund der Verträglichkeit gleicher bzw. ähnlicher Polymere eine feste und dauerhafte Verbindung gegeben.

Die Deckschicht ist gemäß einer bevorzugten Ausführungsvariante mit dem Partikelschaum verschweißt, oder sie ist auf den Partikelschaum aufkaschiert, z.B. flammkaschiert, kalandriert, auflaminiert od. dgl. Sie kann, wie bereits erwähnt, von einer aus Polyalkylenterephthalat bestehenden Tiefziehfolie gebildet sein.

In bevorzugter Ausführung ist die Deckschicht über eine Zwischenschicht aus Fasern auf den Partikelschaum aufgebracht, wobei die Zwischenschicht vorzugsweise ein Faservlies aufweist. Die Zwischenschicht kann z.B. auch ein Gewebe, Gewirke, Gelege, Gestricke od. dgl. sein.

Bevorzugt besteht die Zwischenschicht aus Polyalkylenterephthalat, insbesondere PET, oder einem Blend aus Polyalkylenterephthalaten. Die Zwischenschicht kann mit synthetischen und/oder natürlichen Verstärkungsfasern, wie Glas-, Carbon-, Aramid-, Metall-, Cellulose-, Holz-, Hanffasern od. dgl. verstärkt sein, um die Festigkeit des Verbundwerkstoffes zu erhöhen.

Durch die vorzugsweise mit dem Partikelschaum verschweißte Zwischenschicht wird dieser einerseits bei einem Aufkaschieren der Deckschicht nicht thermisch beeinträchtigt, andererseits wird z.B. beim Hinterschäumen einer insbesondere mit der Deckschicht verschweißten Zwischenschicht vermieden, daß die Partikelstruktur des Partikelschaums in Form von Abdrücken durch die Deckschicht hindurch sichtbar ist. Ferner ergibt sich durch eine solche Zwischenschicht eine angenehme und weiche Haptik eines aus dem Werkstoffverbund bestehenden Formteils, welche für viele Anwendungsfälle gewünscht ist.

Gemäß einer anderen bevorzugten Ausführungsvariante ist vorgesehen, daß die Zwischenschicht eine Mischfaserschicht ist, die einen Anteil von Fasern aus Polyalkylenterepthathalat, insbesondere PET, die mit dem Partikelschaum verschweißt sind, und einen weiteren Anteil von synthetischen und/oder natürlichen Verstärkungsfasern enthält, die eine ausreichende Benetzbarkeit für wenigstens ein die Deckschicht bildendes, aus der flüssigen Phase auf die freie Oberfläche der Mischfaserschicht aufgebrachtes erstarrtendes, ausgehärtendes und/oder vernetztendes Polymer aufweisen. In diesem Fall erfüllt die Zwischenschicht innerhalb des Verbundwerkstoffs zwei Aufgaben, nämlich einerseits die bekannte Verstärkungsfunktion hinsichtlich Festigkeit und Zähigkeit, andererseits die Funktion einer Haftvermittlung zwischen der Deckschicht und dem Polyalkylenterephthalat-Partikelschaum, indem sie Polyalkylenterephthalat-Fasern enthält, die beim Anschmelzen des Partikelschaums eine innige Schweißverbindung mit diesem eingehen. Damit ist zwischen der als Mischfaserschicht ausgebildeten Zwischenschicht und dem Partikelschaum ein fester Verbund gegeben. weiterhin besitzt die freie Oberfläche der Zwischenschicht eine ausreichende Benetzbarkeit für das Aufbringen oder Imprägnieren mit einem erstarrenden, aushärtenden bzw. einem vernetzendem Polymer, so daß auf den Verbund aus Mischfaserschicht und Polyalkylenterephthalat-Partikelschaum eine Beschichtung mit den geforderten Eigenschaften, z.B. glatte Oberfläche, Abriebfestigkeit, Spritz- und Kratzfestigkeit etc., aufgebracht ist. Die auf die freie Oberfläche der Mischfaserschicht aufgebrachte Beschichtung aus einem erstarrenden, aushärtenden oder vernetzenden Polymer kann ihrerseits mehrere Schicht aufweisen, z.B. sandwichartigen Aufbau besitzen.

Das auf die freie Oberfläche der Mischfaserschicht aus der flüssigen Phase aufgebrachte Polymer kann beispielsweise ein Thermoplast sein, der durch beliebige bekannte Verfahren, wie Spritzgießen bzw. Niederdruckspritzgießen, Aufpressen, Aufextrudieren bzw. Coextrudieren, Thermoplastschaumgießen, Thermoformen, Flammspritzen, durch Strangablege- oder Quellflußverfahren, auf die Mischfaserschicht aufgebracht sein. Der durch Erhitzen in die schmelzeflüssige Phase überführte Thermoplast, z.B. Polyolefine, Polystyrol, Polyacrylate etc., erstarrt beim Abkühlen auf der Mischfaserschicht, wobei diese hierbei nicht nur als Haftvermittler und zur Verstärkung dient, sondern insbesondere auch als Wärmeisolationsschicht wirkt, so daß der Partikelschaum beim Aufspritzen, Aufextrudieren od. dgl. nicht thermisch beeinträchtigt wird.

Bevorzugt ist der aus der flüssigen Phase aufgebrachte Thermoplast Polyalkylenterephthalat, insbesondere PET, so daß sich der Verbundwerkstoff durch eine hohe thermische Beständigkeit sowie eine hohe Sortenreinheit und niedere Material- bzw. Herstellungskosten auszeichnet.

Das aus der flüssigen Phase aufgebrachte Polymer kann auch ein vernetzendes Polymer in Form eines Elastomers z.B. eines Kautschuks sein. Mit einem Elastomer lassen sich.zusätzliche Funktionen im Oberflächenbereich verwirklichen, wie erhöhte Griffigkeit, Dämpfung gegen Druck- und Stoßkräfte etc.

Selbstverständlich kann auch ein vernetzendes Polymer in Form eines Duroplasten auf die freie Oberfläche der Mischfaseschicht aufgebracht sein. Der Duroplast kann -wie auch das Elastomer- auf beliebige Weise, z.B. durch Slush-Techniken, Tränken, Imprägnieren, Sprühen oder Reaktionsspritzgießen (RIM, reaction injection molding, bzw. RRIM, reinforced reaction injection molding, oder SRIM, structural reaction injection molding), welches auf raschem Dosieren und Mischen der flüssigen duroplastischen Komponenten, Injektion des reaktiven Gemischs auf die Mischfaserschicht und schnellem Aushärten beruht, aufgebracht sein. Es können z.B. auch flüssige Mono- bzw. Oligomere mit in diesen eingemischten pulverförmigen Polymeren verwendet werden, wobei diese für die Mono- bzw. Oligomere beim Aushärten oder Vernetzen auf der Mischfaserschicht nach Art von Kristallisationskeimen wirken und das ausgehärtete und/oder vernetzte Polymer aufgrund des Anteils an bereits polymerisierten Partikeln eine geringe Polymerisationsschwindung aufweist. Auch bei Verwendung von Duroplasten oder Elastomeren wirkt die Mischfaserschicht zusätzlich als Wärmeisolationsschicht, um den Partikelschaum bei der in der Regel exothermen Vernetzung nicht zu beeinträchtigen. Als Duroplaste kommen im wesentlichen sämtliche bekannten Duroplaste in Frage, z.B. Polyurethane, Epoxid-, Melamin-, Harnstoff-, Formaldehyd- oder Phenolharze sowie Compounds der genannten Harze.

Um dem erfindungsgemäßen Werkstoffverbund eine noch höhere Festigkeit zu verleihen, kann das aus der flüssigen Phase auf die freie Oberfläche der Mischfaserschicht aufgebrachte Polymer mit synthetischen und/oder mit natürlichen Fasern verstärkt sein.

Das aus der flüssigen Phase auf die freie Oberfläche der Mischfaserschicht aufgebrachte Polymer kann auch zumindest sichtseitig eine Dekorschicht, wie eine Folie, ein Textil od. dgl. aufweisen, welche auf beliebige bekannte Weise entweder auf das erstarrte, ausgehärtete und/oder vernetzte Polymer oder gemeinsam mit dem Aufbringen des flüssigen Polymers auf die Mischfaserschicht auf dieses aufgebracht sein kann. Als Dekorschicht kommt z.B. auch ein Furnier, wie ein Holzfurnier, in Frage, welches auf die glatte Oberfläche des erstarrten, ausgehärteten und/oder vernetzten Polymers aufgeklebt ist.

In Weiterbildung des erfindungsgemäßen Werkstoffverbundes ist vorgesehen, daß an wenigstens einer freien Oberfläche des Partikelschaums oder innerhalb desselben wenigstens eine Trägerschicht angeordnet ist. Die Trägerschicht weist bevorzugt wenigstens ein kompaktes Einlegeteil, z.B. ein Tragelement in Form eines Spritzgießteils auf. Sie besteht bevorzugt aus einem kompakten Polymer und enthält weiterhin bevorzugt Polyalkylenterephthalat, insbesondere PET, oder ist gänzlich hieraus gebildet. Die Trägerschicht ist vorzugsweise mit dem Partikelschaum verschweißt. In diesem Fall sorgt die aus Kompaktmaterial bestehende Trägerschicht für die größtmögliche Stabilität und Dauerhaftigkeit des Verbundwerkstoffes, während der Partikelschaum z.B. als Isolationsschicht gegen Stoß, Schall oder Wärme dient und zur Gewichtseinsparung des Verbundwerkstoffes beiträgt. Ist der Verbundwerkstoff mit einer Deckschicht ausgestattet, so verleiht ihm diese, wie bereits erwähnt, eine glatte oder strukturierte Oberfläche und eine höhere Kratz- und Abriebfestigkeit.

Die Erfindung betrifft auch aus einem Verbundwerkstoff des vorgenannten Aufbaus bestehende Formteile sowie Verfahren zur Herstellung solcher Formteile. Gemäß einer Ausführung eines solchen Verfahrens ist vorgesehen, daß dicht gepackte Partikel aus geschäumtem und/oder mit einem Treibmittel versehenem, vorgeschäumtem Polyalkylenterephthalat mit einem niedrigen Kristallitanteil in einer Form auf eine die Oberfläche der Partikel anschmelzende Temperatur gebracht und miteinander zu dem Formkörper verbunden werden, und daß nach dem Abkühlen auf wenigstens eine freie Oberfläche des Partikelschaum-Formkörpers wenigstens eine Schicht, wie eine Deckschicht, auflaminiert wird, und daß der Partikelschaum-Formkörper durch entsprechende Temperaturführung während seiner Herstellung und/oder während des Abkühlens getempert wird. Der Begriff "Form" bezeichnet in diesem Zusammenhang jede formbildende Maßnahme, die zu plattenförmigen, räumlichen oder hohlen Formteilen führt.

Die dicht gepackten Polyalkylenterephthalat-Partikel werden auf eine Temperatur gebracht, bei der die Partikel nur oberflächig anschmelzen und miteinander verschweißen. Nach Abkühlen des Schaumkörpers wird die glatte oder eine textile Struktur aufweisende Deckschicht, welche insbesondere aus thermoplastischen Polymeren, z.B. Polyalkylenterephthalat, besteht mittels beliebiger Techniken, z.B. durch Flammkaschieren, Tiefziehen od. dgl. auflaminiert. In bevorzugter Ausführung werden die Partikel in Gegenwart einer textilen Zwischenschicht, z.B. einem Vlies aus Polyalkylenterephthatlat, auf eine die Oberfläche der Partikel anschmelzende Temperatur gebracht und wird die Zwischenschicht hinterschäumt, der erhaltene Verbund abgekühlt und daraufhin auf die Zwischenschicht die Deckschicht auflaminiert. Derart wird sichergestellt, daß beim Auflaminieren der Deckschicht der Partikelschaum nicht thermisch beeinträchtigt wird und -z.B. im Falle einer Deckschicht in Form einer dünnen Folie- die Schaumpartikel durch die Deckschicht hindurch nicht sichtbar sind. Durch die Zwischenschicht wird insbesondere auch eine weiche Haptik erzielt.

Gemäß einer anderen Verfahrensvariante zur Herstellung eines Formteils aus einem derartigen Werkstoffverbund ist vorgesehen, daß wenigstens eine Schicht, wie eine Deckschicht, und dicht gepackte Partikel aus geschäumtem und/oder mit einem Treibmittel versehenem, vorsgeschäumten Polyalkylenterephthalat in einer Form auf eine zumindest die Oberfläche der Partikel anschmelzende Temperatur gebracht werden und die Deckschicht hinterschäumt und der Verbundwerkstoff anschließend abgekühlt wird. Auch in diesem Fall kann vorzugsweise zwischen den Partikeln und der Deckschicht eine Zwischenschicht, z.B. ein Vlies aus Polyalkylenterephthalat, angeordnet und die Zwischenschicht insbesondere sowohl mit dem Partikelschaum unter Hinterschäumen derselben als auch mit der Deckschicht verschweißt werden. Durch das Hinterschäumen wird eine dauerhafte Verbindung der Schichten erreicht, wobei das einstufige Verfahren eine schnelle und preiswertige Fertigung des erfindungsgemäßen Werkstoffverbundes gewährleistet. Alternativ kann auch zunächst die Zwischenschicht mit der Deckschicht verbunden, z.B. verschweißt und anschließend die Zwischenschicht hinterschäumt werden.

Ein anderes Verfahren zur Herstellung eines Formteils aus einem erfindungsgemäßen Werkstoffverbund sieht vor, daß eine Zwischenschicht in Form einer Mischfaserschicht, die einen Anteil von Fasern aus Polyalkylenterephthalat, insbesondere PET, und einen weiteren Anteil von Verstärkungsfasern mit einer ausreichenden Benetzbarkeit für ein die Deckschicht bildendes Polymer in flüssiger Phase enthält, und dicht gepackte Partikel aus geschäumten und/oder mit wenigstens einem sich im Bereich der Schmelztemperatur des Polyalkylenterepththalats zersetzenden Treibmittel versehenem Polyalkylenterephthalat in einer Form auf eine die Oberfläche der Partikel und der Polyalkylenterephthalat-Fasern der Mischfaserschicht anschmelzende Temperatur gebracht werden, der erhaltene Verbund anschließend abgekühlt und daraufhin auf die freie Oberfläche der Mischfaserschicht das erstarrende, aushärtende und/oder vernetzende Polymer aus der flüssigen Phase aufgebracht wird. Da die als Mischfaserschicht ausgebildete Zwischenschicht in diesem Fall Polyalkylenterephthalat-Fasern enthält, werden diese Fasern also angeschmolzen und entsteht so ein stoffschlüssiger Verbund zwischen der Mischfaserschicht und dem Partikelschaum. Anschließend wird, wie bereits erwähnt, auf die Mischfaserschicht ein schmelzflüssiger Thermoplast oder ein aushärtbares bzw. vernetzendes Polymer (Elastomer oder Duroplast) mittels beliebiger Techniken aus der flüssigen Phase aufgebracht und nach Erstarren bzw. Aushärten oder Vernetzen das gewünschte Formteil erhalten. Über das erstarrende, vernetzende oder aushärtende Polymer können, z.B. auch zwei Formteile miteinander verbunden werden.

Stattdessen kann die Deckschicht auch vorgefertigt, also beispielsweise die Mischfaserschicht mit dem erstarrenden, aushärtbaren und/oder vernetzenden Polymer imprägniert werden. Dabei ist nur darauf zu achten, daß das Polymer nicht auf die andere Seite der Mischfaserschicht durchschlägt. Anschließend werden auf die freie Oberfläche der Mischfaserschicht die Schaumpartikel aufgebracht und erhitzt, wobei sie gleichzeitig eine innige Verbindung mit den Polyalkylenterephthalat-Fasern der Mischfaserschicht eingehen.

Eine Ausführungsform sieht vor, daß das erstarrende, aushärtbare und/oder vernetzende Polymer in der flüssigen Phase mit synthetischen und oder natürlichen Verstärkungsfasern versetzt und daraufhin auf die freie Oberfläche der Mischfaserschicht aufgebracht wird. Handelt es sich bei dem Polymer beispielsweise um einen Thermoplasten, der auf die Mischfaserschicht aufextrudiert wird, so können die Verstärkungsfasern z.B. einem Extruder in einem Bereich der Extruderschnecke zugesetzt werden, in dem der Thermoplast im wesentlichen vollständig plastifiziert ist. Die Verstärkungsfasern können dem flüssigen Polymer -gleichwohl ob es sich bei dem Polymer um einen Thermoplasten, ein Elastomer oder ein Duromer handelt- auf beliebige Weise zugesetzt werden.

Auf das aus der flüssigen Phase aufgebrachte Polymer kann gegebenenfalls sichtseitig eine Dekorschicht, wie eine Folie, ein Textil od. dgl., aufgebracht werden. Hierbei ist in bevorzugter Ausführung vorgesehen, daß die Dekorschicht zugleich mit dem Polymer durch Hinterspritzen, Hinterpressen od. dgl. auf die Mischfaserschicht aufgebracht wird. Somit kann z.B. auf den aus Partikelschaum und Mischfaserschicht bestehenden Verbund das Polymer aus der flüssigen Phase derart aufgebracht werden, indem der Verbund und die Dekorschicht in einer Form angeordnet und zwischen Verbund und Dekorschicht das flüssige und gegebenenfalls mit Verstärkungsfasern versetzte Polymer mittels beliebiger genannter Techniken eingebracht wird. Die glatte Oberfläche der erstarrten, ausgehärteten bzw. vernetzten Polymers kann auch auf einfache Weise nachträglich mit einer Dekorschicht, z.B. mit einem aufgeklebten Holzfurnier, versehen werden.

Bei allen genannten Verfahren können die Partikel in Gegenwart einer kompakten Trägerschicht in der Form auf eine zumindest die Oberfläche der Partikel anschmelzende Temperatur gebracht und der Träger hinter- bzw. umschäumt werden. vorzugsweise wird eine Trägerschicht aus einem Polymer oder einem Polymerblend, z.B. aus im wesentlichen kompaktem Polyalkylenterephthalat, wie PET, verwendet.

Die Partikel sowie gegebenenfalls die Deckschicht und/oder die Zwischenschicht können mittels einer sie diffundierenden Gasphase, z.B. Heißdampf, auf die Schmelztemperatur gebracht werden. Dieses Verfahren führt aufgrund der diffusionsoffenen Struktur der Schichten zu einem innigen Verbund des Partikelschaums sowie der Schichten untereinander. Stattdessen können die Partikel und gegebenenfalls die Deckschicht und/oder die Zwischenschicht und/oder die Trägerschicht mittels Mikrowellenenergie auf Schmelztemperatur gebracht werden, wobei vorzugsweise ein mikrowellenabsorbierendes Medium, wie Wasser, Alkohole od. dgl., verwendet werden kann. Das mikrowellenabsorbierende Medium kann beispielsweise in der flüssigen Phase auf die zu verbindenden Oberflächen aufgebracht und nach Verdunsten desselben aus der Form abgezogen werden. Derart kann durch Art und Menge des verwendeten mikrowellenabsorbierenden Mediums einerseits eine zuverlässige Schweißverbindung sichergestellt, andererseits eine lokale Überhitzung in der Form ausgeschlossen werden.

Nachstehend ist die Erfindung anhand von Ausführungsbeispielen unter Bezugnahme auf die Zeichnungen im einzelnen erläutert. Es zeigen:
- Fig. 1:: einen Querschnitt eines aus einem erfindungsgemäßen Verbundwerkstoff hergestellten Formteils in Form eines Sportgerätes und
- Fig. 2:: einen Querschnitt eines aus einem erfindungsgemäßen Verbundwerkstoff hergestellten Formteils in Form eines Ausstattungsteils für den Innenbereich von Kraftfahrzeugen.

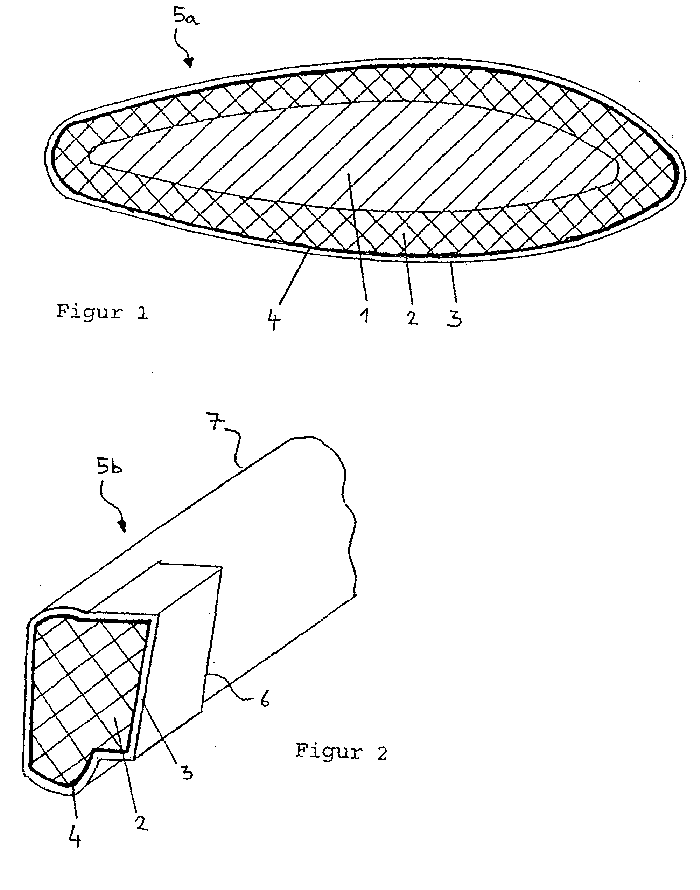

Das in Fig. 1 dargestellte Formteil 5a, beispielsweise ein Surfbrett, weist eine kompakte Trägerschicht 1 auf, die z.B. aus PET oder aus einem Blend von PET und andere Polyalkylenterephthalaten bestehen kann. Die Trägerschicht 1 umgebend ist ein Partikelschaum 2 angeordnet, der ebenfalls z.B. aus PET oder aus einem Blend von PET und anderen Polyalkylenterephthalaten besteht und insbesondere mit der Trägerschicht verschweißt ist, so daß eine innige Verbindung zwischen Trägerschicht 1 und Partikelschaum 2 vorhanden ist. Auf dem Partikelschaum ist eine Zwischenschicht 4 in Form einer Mischfaserschicht angeordnet, die einen Anteil von Polyalkylenterephthalatfasern enthält, welche mit dem Partikelschaum 2 verschweißt sind. Weiterhin enthält die Mischfaserschicht Verstärkungsfasern, z.B. Glas- oder Carbonfasern, welche eine ausreichende Benetzbarkeit für ein eine Deckschicht 3 bildendes, aus der flüssigen Phase auf die freie Oberfläche der Mischfaserschicht aufgebrachtes erstarrtes, ausgehärtetes oder vernetztes Polymer, z.B. Polyurethan, aufweisen. Die Deckschicht 3 sorgt für eine hohe Diffusionsdichtigkeit, Spritz-, Kratz-, und Abriebfestigkeit. Sie kann auch einen sandwichartigen Aufbau aus mehreren übereinander angeordneten Schichten haben.

In Fig. 2 ist ein sortenreines Formteil 5b, beispielsweise ein Armaturenbrett 7 eines Kraftfahrzeuges mit einem Instrumentengehäuse 6 dargestellt. Das Formteil 5b besteht z.B. aus einem PET-Partikelschaum 2 und einer sichtseitig auf diesen aufgebrachten dekorativen Deckschicht 3 aus PET. Die Deckschicht 3 kann z.B. in Form eines Textils, wie eines Gewebes, Gewirkes od. dgl., ausgebildet sein. Eine zwischen Partikelschaum 2 und Deckschicht 3 angeordnete, beispielsweise aus einem PET-Vlies bestehende Zwischenschicht 4 sorgt für eine weiche Haptik des Formteils 5b. Ist die Deckschicht 3 auf den Partikelschaum 2 auflaminiert, so stellt die Zwischenschicht 4 zusätzlich einen Schutz vor thermischer Beeinträchtigung des Partikelschaums 2 beim Aufbringen der Deckschicht 3 dar. Ist die z.B. mit der Deckschicht 3 veschweißte Zwischenschicht 4 mit dem Partikelschaum 2 hinterschäumt, so wird ein Durchschlagen des Partikelschaums 2 an die sichtseitige Oberfläche der Deckschicht 3 verhindert.

## Patentansprüche

1. Verfahren zur Herstellung eines Werkstoffverbundes aus einem Partikelschaum aus einem thermoplastischen Kunststoff und wenigstens einer mit diesem verbundenen Schicht, indem die vorgeschäumten Partikel auf eine Temperatur im Bereich der Schmelztemperatur erhitzt und miteinander zu einem Formkörper verbunden werden und währenddessen oder danach mit der Schicht verbunden werden, **dadurch gekennzeichnet, daß** ein Partikelschaum aus Polyalkylenterephthalat oder einem Blend aus Polyalkylenterephthalat mit einem niedrigen Kristallitanteil in ansonsten amorpher Phase eingesetzt wird, und daß der Partikelschaum bei der Bildung des Formkörpers bzw. des Verbundes mit der Schicht und/oder anschließend daran bei einer die amorphe Phase in einen höheren Gesamt-Kristallitanteil umwandelnden Temperatur getempert wird.

2. Verfahren nach Anspruch 1, **dadurch gekennzeichnet, daß** der Partikelschaum mit Heißdampf unter Druck zu dem Formkörper gebildet wird, und der Druck oder die Druckhaltezeit zum Tempern des Partikelschaums gesteuert wird.

3. Verfahren nach Anspruch 1 oder 2, **dadurch gekennzeichnet, daß** der Formkörper nach seiner Herstellung weiter getempert wird.

4. Verfahren nach einem der Ansprüche 1 bis 3, **dadurch gekennzeichnet, daß** der Formkörper nach seiner Herstellung langsam ausgekühlt wird.

5. Verfahren nach einem der Ansprüche 1 bis 4, **dadurch gekennzeichnet, daß** die Temperaturführung beim Tempern aufgrund einer DSC-Messung gesteuert wird.

6. Werkstoffverbund, bestehend aus einem Formkörper aus einem Partikelschaum und wenigstens einer mit dem Formkörper verbundenen Schicht, hergestellt nach dem Verfahren gemäß einem der Ansprüche 1 bis 5, **dadurch gekennzeichnet, daß** der Partikelschaum (2) aus einem Polyalkylenterephthalat oder einem Blend aus Polyalkylenterephthalaten besteht.

7. Werkstoffverbund nach Anspruch 6, **dadurch gekennzeichnet, daß** der Partikelschaum (2) aus Polyethylenterephthalat (PET) besteht.

8. Werkstoffverbund nach Anspruch 6 oder 7, **dadurch gekennzeichnet, daß** der Partikelschaum synthetische und/oder natürliche Verstärkungsfasern aufweist.

9. Werkstoffverbund nach einem der Ansprüche 6 bis 8, **dadurch gekennzeichnet, daß** die mit dem Partikelschaum (2) verbundene Schicht eine eine Sichtseite bildende Deckschicht (3) ist.

10. Werkstoffverbund nach Anspruch 9, **dadurch gekennzeichnet, daß** die Deckschicht (3) eine Folie aus wenigstens einem thermoplastischen Polymer ist.

11. Werkstoffverbund nach Anspruch 9, **dadurch gekennzeichnet, daß** die Deckschicht (3) eine textile Struktur aufweist.

12. Werkstoffverbund nach einem der Ansprüche 9 bis 11, **dadurch gekennzeichnet, daß** die Deckschicht (3) aus Polyalkylenterephthalat, insbesondere PET, oder einem Blend aus Polyalkylenterephthalaten besteht.

13. Werkstoffverbund nach einem der Ansprüche 9 bis 12, **dadurch gekennzeichnet, daß** die Deckschicht (3) mit dem Partikelschaum (2) verschweißt ist.

14. Werkstoffverbund nach einem der Ansprüche 9 bis 12, **dadurch gekennzeichnet, daß** die Deckschicht (3) auf den Partikelschaum (2) aufkaschiert ist.

15. Werkstoffverbund nach einem der Ansprüche 6 bis 14, **dadurch gekennzeichnet, daß** zwischen der Deckschicht (3) und dem Partikelschaum (2) eine Zwischenschicht (4) aus Fasern angeordnet ist.

16. Werkstoffverbund nach Anspruch 15, **dadurch gekennzeichnet, daß** die Zwischenschicht (4) ein Faservlies, gelege, -gewebe, -gewirke oder -gestricke ist.

17. Werkstoffverbund nach Anspruch 16, **dadurch gekennzeichnet, daß** die Fasern der Zwischenschicht aus Polyalkylenterephthalat, insbesondere PET, oder einem Blend aus Polyalkylenterephthalat besteht.

18. Werkstoffverbund nach einem der Ansprüche 15 bis 17, **dadurch gekennzeichnet, daß** die Zwischenschicht (4) synthetische und/oder natürliche Verstärkungsfasern aufweist.

19. Werkstoffverbund nach einem der Ansprüche 15 bis 18 **dadurch gekennzeichnet, daß** die Zwischenschicht (4) mit dem Partikelschaum (2) verschweißt ist.

20. Werkstoffverbund nach einem der Ansprüche 15 bis 19, **dadurch gekennzeichnet, daß** die Zwischenschicht (4) mit der Deckschicht (3) verschweißt ist.

21. Werkstoffverbund nach einem der Ansprüche 15 bis 20, **dadurch gekennzeichnet, daß** die Deckschicht (3) auf die Zwischenschicht (4) aufkaschiert ist.

22. Werkstoffverbund nach einem der Ansprüche 15 bis 21, **dadurch gekennzeichnet, daß** die Zwischenschicht (4) eine Mischfaserschicht ist, die einen Anteil von Fasern aus Polyalkylenterephthalat, insbesondere PET, die mit dem Partikelschaum (2) verschweißt sind, und einen weiteren Anteil von synthetischen und/oder natürlichen Verstärkungsfasern enthält, die eine ausreichende Benetzbarkeit für wenigstens ein die Deckschicht (3) bildendes, aus der flüssigen Phase auf die freie Oberfläche der Mischfaserschicht aufgebrachtes, erstarrendes, aushärtendes und/oder vernetztes Polymer aufweisen.

23. Werkstoffverbund nach Anspruch 22, **dadurch gekennzeichnet, daß** das auf die freie Oberfläche der Mischfaserschicht aufgebrachte Polymer ein Thermoplast ist.

24. Werkstoffverbund nach Anspruch 23, **dadurch gekennzeichnet, daß** das auf die freie Oberfläche der Mischfaserschicht aufgebrachte Polymer Polyalkylenterephthalat, insbesondere PET ist.

25. Werkstoffverbund nach Anspruch 22, **dadurch gekennzeichnet, daß** das auf die freie Oberfläche der Mischfaserschicht aufgebrachte Polymer ein Elastomer ist.

26. Werkstoffverbund nach Anspruch 22, **dadurch gekennzeichnet, daß** das auf die freie Oberfläche der Mischfaserschicht aufgebrachte Polymer ein Duroplast ist.

27. Werkstoffverbund nach einem der Ansprüche 22 bis 26, **dadurch gekennzeichnet, daß** das aus der flüssigen Phase auf die freie Oberfläche der Mischfaserschicht aufgebrachte Polymer faserverstärkt ist.

28. Werkstoffverbund nach einem der Ansprüche 22 bis 27, **dadurch gekennzeichnet, daß** das aus der flüssigen Phase auf die freie Oberfläche der Mischfaserschicht aufgebrachte Polymer zumindest sichtseitig eine Dekorschicht, wie eine Folie, ein Textil od. dgl., aufweist.

29. Werkstoffverbund nach einem der Ansprüche 6 bis 28, **dadurch gekennzeichnet, daß** an einer freien Oberfläche des Partikelschaums (2) oder innerhalb desselben wenigstens eine Trägerschicht (1) angeordnet ist.

30. Werkstoffverbund nach Anspruch 29, **dadurch gekennzeichnet, daß** die Trägerschicht wenigstens ein kompaktes Einlegeteil aufweist.

31. Werkstoffverbund nach Anspruch 29 oder 30, **dadurch gekennzeichnet, daß** die Trägerschicht (1) aus wenigstens einem Polymer besteht und kompakt ausgebildet ist.

32. Werkstoffverbund nach Anspruch 31, **dadurch gekennzeichnet, daß** die Trägerschicht (1) Polyalkylenterephthalat, insbesondere PET, enthält oder ausschließlich hieraus gebildet ist.

33. werkstoffverbund nach einem der Ansprüche 28 bis 32, **dadurch gekennzeichnet, daß** die Trägerschicht (1) mit dem Partikelschaum (2) verschweißt ist.

34. Werkstoffverbund nach einem der Ansprüche 6 bis 33, **dadurch gekennzeichnet, daß** mehrere, insbesondere sandwichartig angeordnete Schichten vorgesehen sind, von denen wenigstens eine ein Partikelschaum (2) aus Polyalkylenterephthalat, insbesondere PET ist.

35. Formteil (5a, 5b) aus einem Werkstoffverbund gemäß einem der Ansprüche 6 bis 33.

36. Verwendung eines Formteils gemäß Anspruch 35 für Innenverkleidungen oder als technische Bauteile an Kraftfahrzeugen.

37. Verwendung eines Formteils gemäß Anspruch 35 für Möbel, insbesondere Gartenmöbel.

38. Verwendung des Formteils gemäß Anspruch 35 für Sportgeräte, wie Surfbretter, Wellengleiter, Bootskörper od. dgl.

39. Verwendung eines Formteils gemäß Anspruch 35 für Verpackungen, Isolationsbehälter oder Gehäuse.

40. Verfahren zur Herstellung eines Formteils (5a, 5b) aus einem Werkstoffverbund gemäß einem der Ansprüche 6 bis 34, **dadurch gekennzeichnet, daß** Partikel aus geschäumtem und/oder mit einem Treibmittel versehenem, vorgeschäumten Polyalkylenterephthalat mit einem niedrigen Kristallitanteil in ansonsten amorpher Phase in einer Form auf eine die Oberfläche der Partikel anschmelzende Temperatur gebracht und miteinander zu dem Formkörper verbunden werden, und daß nach dem Abkühlen auf wenigstens eine Schicht, wie eine Deckschicht (3), auflaminiert wird, und daß der Partikelschaum-Formkörper durch entsprechende Temperaturführung während seiner Herstellung und/oder während des Abkühlens getempert wird.

41. Verfahren nach Anspruch 40, **dadurch gekennzeichnet, daß** die Partikel in Gegenwart einer Polyalkylenterephthalat enthaltenden Zwischenschicht (4) auf eine die Oberfläche der Partikel anschmelzende Temperatur gebracht werden und die Zwischenschicht (4) hinterschäumt, der erhaltene Verbund abgekühlt und daraufhin auf die Zwischenschicht (4) die Deckschicht (3) auflaminiert wird.

42. Verfahren nach Anspruch 40 **dadurch gekennzeichnet, daß** wenigstens eine Schicht, wie eine Deckschicht, und dicht gepackte Partikel aus geschäumtem und/oder mit einem Treibmittel versehenem vorgeschäumtem Polyalkylenterephthalat in einer Form auf eine zumindest die Oberfläche der Partikel anschmelzende Temperatur gebracht werden und die Deckschicht (3) hinterschäumt und der Verbundwerkstoff anschließend abgekühlt wird, und daß der Partikelschaum-Formkörper durch entsprechende Temperaturführung während seiner Herstellung und/oder während des Abkühlens getempert wird.

43. Verfahren nach Anspruch 42, **dadurch gekennzeichnet, daß** zwischen den Partikeln und der Deckschicht (3) eine Zwischenschicht (4) angeordnet und die Zwischenschicht (4) sowohl mit dem Partikelschaum (2) unter Hinterschäumen derselben als auch mit der Deckschicht (3) verschweißt wird.

44. Verfahren nach Anspruch 40 **dadurch gekennzeichnet, daß** eine Zwischenschicht (4) in Form einer Mischfaserschicht (2), die einen Anteil von Fasern aus Polyalkylenterephthalat, insbesondere PET, und einen weiteren Anteil von Verstärkungsfasern mit einer ausreichenden Benetzbarkeit für ein die Deckschicht bildendes Polymer in flüssiger Phase enthält, und dicht gepackte Partikel aus geschäumtem und/oder mit wenigstens einem Treibmittel versehenem, vorgeschäumtem Polyalkylenterephthalat in einer Form auf eine die Oberfläche der Partikel und der Polyalkylenterephthalat-Fasern der Mischfaserschicht anschmelzende Temperatur gebracht werden, der erhaltene Verbund anschließend abgekühlt und daraufhin auf die freie Oberfläche der Mischfaserschicht das erstarrende, aushärtende und/oder vernetzende Polymer aus der flüssigen Phase aufgebracht wird, und daß der Partikelschaum-Formkörper durch entsprechende Temperaturführung während seiner Herstellung und/oder während des Abkühlens getempert wird.

45. Verfahren nach Anspruch 44, **dadurch gekennzeichnet, daß** das erstarrende, aushärtende und/oder vernetzende Polymer in der flüssigen Phase mit synthetischen und/oder natürlichen Verstärkungsfasern versetzt und daraufhin auf die freie Oberfläche der Mischfaserschicht aufgebracht wird.

46. verfahren nach Anspruch 44 und 45, **dadurch gekennzeichnet, daß** auf das aus der flüssigen Phase aufgebrachte Polymer sichtseitig eine Dekorschicht, wie eine Folie ein Textil oder dergleichen, aufgebracht wird.

47. Verfahren nach Anspruch 46, **dadurch gekennzeichnet, daß** die Dekorschicht zugleich mit dem Polymer durch Hinterspritzen, Hinterpressen oder dergleichen auf die Mischfaserschicht aufgebracht wird.

48. Verfahren nach einem der Ansprüche 40 bis 47, **dadurch gekennzeichnet, daß** die Partikel in Gegenwart einer kompakten Trägerschicht (1), insbesondere aus wenigstens einem Polymer, in der Form auf eine zumindest die Oberfläche der Partikel anschmelzende Temperatur gebracht und die Trägerschicht (1) hinter- bzw. umschäumt wird.

49. Verfahren nach einem der Ansprüche 40 bis 48, **dadurch gekennzeichnet, daß** die Partikel und gegebenenfalls die Deckschicht (3) und/oder die Zwischenschicht (4) mittels einer sie diffundierenden,-heißen Gasphase auf Schmelztemperatur gebracht werden.

50. Verfahren nach einem der Ansprüche 40 bis 48, **dadurch gekennzeichnet, daß** die Partikel und gegebenenfalls die Deckschicht (3) und/oder die Zwischenschicht (4) und/oder die Trägerschicht (1) mittels Mikrowellenenergie auf Schmelztemperatur gebracht werden.

51. Verfahren nach Anspruch 50, **dadurch gekennzeichnet, daß** ein mikrowellenabsorbierendes Medium verwendet wird.

## Claims

1. Method of producing a composite material from a particle foam made of a thermoplastic plastic material and at least one layer bonded to the latter, the prefoamed particles being heated to a temperature in the region of the melting temperature and being bonded together into a moulded body and being bonded to the layer either at the time or subsequently, **characterised in that** a particle foam made of polyalkylene terephthalate or a blend of polyalkylene terephthalate with a low crystallite proportion in an otherwise amorphous phase is used, and **in that**, during the formation of the moulded body or of the composite with the layer and/or subsequent thereto, the particle foam is tempered at a temperature which converts the amorphous phase into a higher overall crystallite proportion.

2. Method according to claim 1, **characterised in that** the particle foam is formed into the moulded body with superheated steam under pressure and the pressure or the pressure retention time for tempering the particle foam is controlled.

3. Method according to claim 1 or 2, **characterised in that** the moulded body is further tempered after its production.

4. Method according to one of the claims 1 to 3, **characterised in that** the moulded body is cooled slowly after its production.

5. Method according to one of the claims 1 to 4, **characterised in that** the temperature regulation during tempering is controlled on the basis of a DSC measurement.

6. Composite material, comprising a moulded body made of a particle foam and at least one layer bonded to the moulded body, produced according to the method according to one of the claims 1 to 5, **characterised in that** the particle foam (2) comprises a polyalkylene terephthalate or a blend of polylalkylene terephthalates.

7. Composite material according to claim 6, **characterised in that** the particle foam (2) comprises polyethylene terephthalate (PET).

8. Composite material according to claim 6 or 7, **characterised in that** the particle foam has synthetic and/or natural reinforcing fibres.

9. Composite material according to one of the claims 6 to 8, **characterised in that** the layer bonded to the particle foam (2) is a cover layer (3) which forms a visual surface.

10. Composite material according to claim 9, **characterised in that** the cover layer (3) is a film made of at least one thermoplastic polymer.

11. Composite material according to claim 9, **characterised in that** the cover layer (3) has a textile structure.

12. Composite material according to one of the claims 9 to 11, **characterised in that** the cover layer (3) comprises polyalkylene terephthalate, in particular PET, or a blend of polyalkylene terephthalates.

13. Composite material according to one of the claims 9 to 12, **characterised in that** the cover layer (3) is welded to the particle foam (2).

14. Composite material according to one of the claims 9 to 12, **characterised in that** the cover layer (3) is laminated onto the particle foam (2).

15. Composite material according to one of the claims 6 to 14, **characterised in that** an intermediate layer (4) made of fibres is disposed between the cover layer (3) and the particle foam (2).

16. Composite material according to claim 15, **characterised in that** the intermediate layer (4) is a non-woven fabric, pleated fabric, woven fabric, knitted fabric or hosiery fabric.

17. Composite material according to claim 16, **characterised in that** the fibres of the intermediate layer comprise polyalkylene terephthalate, in particular PET, or a mixture of polyalkylene terephthalate.

18. Composite material according to one of the claims 15 to 17, **characterised in that** the intermediate layer (4) has synthetic and/or natural reinforcing fibres.

19. Composite material according to one of the claims 15 to 18, **characterised in that** the intermediate layer (4) is welded to the particle foam (2).

20. Composite material according to one of the claims 15 to 19, **characterised in that** the intermediate layer (4) is welded to the cover layer (3).

21. Composite material according to one of the claims 15 to 20, **characterised in that** the cover layer (3) is laminated onto the intermediate layer (4).

22. Composite material according to one of the claims 15 to 21, **characterised in that** the intermediate layer (4) is a mixed fibre layer which contains a proportion of fibres made of polyalkylene terephthalate, in particular PET, which are welded to the particle foam (2), and a further proportion of synthetic and/or natural reinforcing fibres, which have an adequate wettability for at least one polymer, which forms the cover layer (3), is applied upon the free surface of the mixed fibre layer from the liquid phase, solidifies, hardens and/or is cross-linked.

23. Composite material according to claim 22, **characterised in that** the polymer which is applied upon the free surface of the mixed fibre layer is a thermoplast.

24. Composite material according to claim 23, **characterised in that** the polymer which is applied upon the free surface of the mixed fibre layer is polyalkylene terephthalate, in particular PET.

25. Composite material according to claim 22, **characterised in that** the polymer which is applied upon the free surface of the mixed fibre layer is an elastomer.

26. Composite material according to claim 22, **characterised in that** the polymer which is applied upon the free surface of the mixed fibre layer is a duroplast.

27. Composite material according to one of the claims 22 to 26, **characterised in that** the polymer which is applied upon the free surface of the mixed fibre layer from the liquid phase is fibre-reinforced.

28. Composite material according to one of the claims 22 to 27, **characterised in that** the polymer which is applied upon the free surface of the mixed fibre layer from the liquid phase has, at least on the visual side, a decorative layer, such as a film, a textile or the like.

29. Composite material according to one of the claims 6 to 28, **characterised in that** at least one carrier layer (1) is disposed on a free surface of the particle foam (2) or within the same.

30. Composite material according to claim 29, **characterised in that** the carrier layer has at least one compact insert.

31. Composite material according to claim 29 or 30, **characterised in that** the carrier layer (1) comprises at least one polymer and is configured in a compact manner.

32. Composite material according to claim 31, **characterised in that** the carrier layer (1) contains polyalkylene terephthalate, in particular PET, or is formed exclusively therefrom.

33. Composite material according to one of the claims 28 to 32, **characterised in that** the carrier layer (1) is welded to the particle foam (2).

34. Composite material according to one of the claims 6 to 33, **characterised in that** a plurality of layers, in particular layers disposed in sandwich-like manner, is provided, of which at least one is a particle foam (2) made of polyalkylene terephthalate, in particular PET.

35. Moulded article (5a, 5b) made of a composite material according to one of the claims 6 to 33.

36. Use of a moulded article according to claim 35 for internal trimmings or as technical components in automotive vehicles.

37. Use of a moulded article according to claim 35 for furniture, in particular garden furniture.

38. Use of the moulded article according to claim 35 for sports apparatus, such as surf boards, sailboards, boat hulls or the like.

39. Use of a moulded article according to claim 35 for packagings; insulation containers or housings.

40. Method of producing a moulded article (5a, 5b) made of a composite material according to one of the claims 6 to 34, **characterised in that** particles of polyalkylene terephthalate, which is foamed and/or prefoamed, provided with a propellant, with a low crystallite proportion in an otherwise amorphous phase, are brought in a mould to a temperature which melts the surface of the particles and are bonded together into the moulded body, and **in that**, after cooling, lamination occurs upon at least one layer, such as a cover layer (3), and **in that** the particle foam moulded body is tempered by corresponding temperature regulation during its production and/or during cooling.

41. Method according to claim 40, **characterised in that** the particles, in the presence of an intermediate layer (4) which contains polyalkylene terephthalate, are brought to a temperature which melts the surface of the particles and the intermediate layer (4) is foamed at the rear, the obtained composite is cooled and thereupon the cover layer (3) is laminated onto the intermediate layer (4).

42. Method according to claim 40, **characterised in that** at least one layer, such as a cover layer, and densely packed particles of polyalkylene terephthalate, which is foamed and/or prefoamed, provided with a propellant, is brought in a mould to a temperature which melts at least the surface of the particles and the cover layer (3) is foamed at the rear and the composite material is subsequently cooled, and **in that** the particle foam moulded body is tempered by corresponding temperature regulation during its production and/or during cooling.

43. Method according to claim 42, **characterised in that** an intermediate layer (4) is disposed between the particles and the cover layer (3) and the intermediate layer (4) is welded both to the particle foam (2) during foaming of the same at the rear and to the cover layer (3).

44. Method according to claim 40, **characterised in that** an intermediate layer (4) in the form of a mixed fibre layer (2), which contains a proportion of fibres made of polyalkylene terephthalate, in particular PET, and a further proportion of reinforcing fibres, with an adequate wettability for a polymer in the liquid phase, which forms the cover layer, and densely packed particles of polyalkylene terephthalate, which is foamed and/or prefoamed, provided with at least one propellant, is brought in a mould to a temperature which melts the surface of the particles and of the polyalkylene terephthalate fibres of the mixed fibre layer, the obtained composite is subsequently cooled and thereupon the polymer which is solidifying, hardening and/or cross-linking is applied upon the free surface of the mixed fibre layer from the liquid phase, and **in that** the particle foam moulded body is tempered by corresponding temperature regulation during its production and/or during cooling.

45. Method according to claim 44, **characterised in that** the solidifying, hardening and/or cross-linking polymer in the liquid phase is mixed with synthetic and/or natural reinforcing fibres and thereupon is applied upon the free surface of the mixed fibre layer.

46. Method according to claim 44 and 45, **characterised in that**, upon the visual side, a decorative layer, such as a film, a textile or the like, is applied upon the polymer applied from the liquid phase.

47. Method according to claim 46, **characterised in that** the decorative layer (4) is applied upon the mixed fibre layer simultaneously with the polymer by means of spraying at the rear, pressing at the rear, or the like.

48. Method according to one of the claims 40 to 47, **characterised in that** the particles, in the presence of a compact carrier layer (1), in particular made of at least one polymer, are brought in the mould to a temperature which melts at least the surface of the particles, and the carrier layer (1) is foamed at the rear or foamed around.

49. Method according to one of the claims 40 to 48, **characterised in that** the particles and if necessary the cover layer (3) and/or the intermediate layer (4) are brought to melting temperature by means of a hot gas phase which diffuses them.

50. Method according to one of the claims 40 to 48, **characterised in that** the particles and if necessary the cover layer (3) and/or the intermediate layer (4) and/or the carrier layer (1) are brought to melting temperature by means of microwave energy.

51. Method according to claim 50, **characterised in that** a microwave-absorbing medium is used.

## Revendications

1. Procédé de fabrication d'un matériau composite constitué d'une mousse de particules d'une matière thermoplastique et d'au moins une couche qui lui est reliée, selon lequel les particules mises préalablement à l'état de mousse sont élevées à une température dans la zone de la température de fusion avec pour effet de les relier entre elles en donnant un corps moulé, les particules, pendant cette opération ou après, étant reliées à la couche,
**caractérisé en ce qu'**
une mousse de particules de polyalkylènetérephtalate ou d'un mélange de ce corps et d'une faible fraction de cristallite en phase amorphe est utilisé, et la mousse de particules lors de la formation du corps moulé c'est-à-dire de la liaison avec la couche et/ou à la suite de cette liaison est recuite à une température transformant la phase amorphe en une proportion plus élevée cristallites la phase amorphe.

2. Procédé selon la revendication 1,
**caractérisé en ce que**
la mousse de particules est formée par l'action de vapeur chaude sous pression sur le corps moulé et la pression ou la durée de son maintien est commandée en fonction du recuit de la mousse de particules.

3. Procédé selon la revendication 1 ou 2,
**caractérisé en ce qu'**
on continue de recuire le corps moulé, après sa fabrication.

4. Procédé selon l'une des revendications 1 à 3,
**caractérisé en ce que**
le corps moulé, après sa fabrication, est lentement refroidi.

5. Procédé selon l'une des revendications 1 à 4,
**caractérisé en ce que**
lors du recuit la conduite de la température, est commandée par mesure DSC (chromatographie en couche mince).

6. Produit composite, sous la forme d'un corps moulé composé d'une mousse de particules et d'au moins une couche reliée à cette mousse, fabriqué par le procédé selon l'une des revendications 1 à 5,
**caractérisé en ce que**
la mousse de particules (2) est faite d'un polyalkylènetéréphtalate ou d'un mélange de polyalkylènetéréphtalates.

7. Produit composite selon la revendication 6,
**caractérisé en ce que**
la mousse de particules (2) est faite de polyéthylènetérephtalate (PET).

8. Produit composite selon la revendication 6 ou 7,
**caractérisé en ce que**
la mousse de particules présente des fibres de renforcement, naturelles et/ou synthétiques.

9. Produit composite selon l'une des revendications 6 à 8,
**caractérisé en ce que**
la couche reliée à la mousse de particules (2) est une couche de couverture (3) formant une face visible.

10. Produit composite selon la revendication 9,
**caractérisé en ce que**
la couche de couverture (3) est une feuille faite d'au moins un polymère thermoplastique.

11. Produit composite selon la revendication 9,
**caractérisé en ce que**
la couche de couverture (3) présente une structure textile.

12. Produit composite selon l'une des revendications 9 à 11,
**caractérisé en ce que**
la couche de couverture (3) est faite d'un polyalkylènetéréphtalate, en particulier de PET, ou d'un mélange de polyalkylènetéréphtalates.

13. Produit composite selon l'une quelconque des revendications 9 à 12,
**caractérisé en ce que**
la couche de couverture (3) est soudée à la mousse de particules (2).

14. Produit composite selon l'une quelconque des revendications 9 à 12,
**caractérisé en ce que**
la couche de couverture (3) est contrecollée sur la mousse de particules (2).

15. Produit composite selon l'une quelconque des revendications 6 à 14,
**caractérisé en ce qu'**
entre la couche de couverture (3) et la mousse de particules (2) se trouve une couche intermédiaire (4).

16. Produit composite selon la revendication 15,
**caractérisé en ce que**
la couche intermédiaire (4) est une nappe de fibres, non tissée, tissée ou tricotée.

17. Produit composite selon la revendication 16,
**caractérisé en ce que**
les fibres de la couche intermédiaire sont en polyalkylènetéréphtalate, en particulier du PET, ou en un mélange de polyalkylènetéréphtalates.

18. Produit composite selon l'une quelconque des revendications 15 à 17,
**caractérisé en ce que**
la couche intermédiaire (4) présente des fibres de renforcement, naturelles et/ou synthétiques.

19. Produit composite selon l'une quelconque des revendications 15 à 18,
**caractérisé en ce que**
la couche intermédiaire (4) est soudée à la mousse de particules (2).

20. Produit composite selon l'une quelconque des revendications 15 à 19,
**caractérisé en ce que**
la couche intermédiaire (4) est soudée à la couche de couverture (3).

21. Produit composite selon l'une quelconque des revendications 15 à 20,
**caractérisé en ce que**
la couche de couverture (3) est contrecollée sur la couche intermédiaire (4).

22. Produit composite selon l'une quelconque des revendications 15 à 21,
**caractérisé en ce que**
la couche intermédiaire (4) est une couche de fibres mélangées dont une fraction est constituée par des fibres en polyalkylènetéréphtalate, en particulier en PET, qui sont soudées à la mousse de particules (2), l'autre fraction étant constituée par des fibres de renforcement naturelles et/ou synthétiques qui présentent une mouillabilité suffisante pour au moins un polymère formant la couche de couverture (3), déposé à partir d'une phase liquide sur la surface libre de la couche de fibres mélangées, et qui se gélifie, se durcit et/ou est réticulé.

23. Produit composite selon la revendication 22,
**caractérisé en ce que**
le polymère déposé sur la surface libre de la couche de fibres mélangées est un thermoplaste.

24. Produit composite selon la revendication 23,
**caractérisé en ce que**
le polymère déposé sur la surface libre de la couche de fibres mélangées est un polyalkylènetéréphtalate, en particulier du PET.

25. Produit composite selon la revendication 22,
**caractérisé en ce que**
le polymère déposé sur la surface libre de la couche de fibres mélangées est un élastomère.

26. Produit composite selon la revendication 22,
**caractérisé en ce que**
le polymère déposé sur la surface libre de la couche de fibres mélangées est un duroplaste.

27. Produit composite selon l'une des revendications 22 à 26,
**caractérisé en ce que**
le polymère déposé à partir d'une phase liquide sur la surface libre de la couche de fibres mélangées est renforcé par des fibres.

28. Produit composite selon l'une des revendications 22 à 27,
**caractérisé en ce que**
le polymère déposé à partir d'une phase liquide sur la surface libre de la couche de fibres mélangées est renforcé par des fibres, et présente au moins sur sa face visible une couche décorative telle qu'une feuille, un textile ou similaire.

29. Produit composite selon l'une quelconque des revendications 6 à 28,
**caractérisé en ce que**
sur une surface libre de la mousse de particules (2) ou à l'intérieur de celle-ci est placée au moins une couche support (1).

30. Produit composite selon la revendication 29,
**caractérisé en ce que**
la couche support présente au moins une partie insérée compacte.

31. Produit composite selon la revendication 28 ou 29,
**caractérisé en ce que**
la couche support (1) est faite d'au moins un polymère et elle est compacte.

32. Produit composite selon la revendication 31,
**caractérisé en ce que**
la couche support (1) contient un polyalkylènetéréphtalate, notamment du PET, ou en est totalement composée.

33. Produit composite selon l'une quelconque des revendications 28 à 32,
**caractérisé en ce que**
la couche support (1) est soudée à la mousse de particules (2).

34. Produit compose selon l'une quelconque des revendications 6 à 33,
**caractérisé en ce qu'**
il est prévu plusieurs couches, disposées notamment en sandwich, dont au moins une est une mousse de particules (2) en polyalkylènetéréphtalate, notamment en PET.

35. Pièce moulée (5a, 5b) en produit composite selon l'une des revendications 6 à 33.

36. Utilisation d'une pièce moulée selon la revendication 35 pour réaliser des revêtements internes ou des composants techniques dans des véhicules automobiles.

37. Utilisation d'une pièce moulée selon la revendication 35, pour réaliser des meubles, en particulier des meubles de jardin.

38. Utilisation d'une pièce moulée selon la revendication 35, pour réaliser des articles de sport, comme des planches de surf, des skis nautiques, des corps de bateau ou similaires.

39. Utilisation d'une pièce moulée selon la revendication 35, pour réaliser des emballages de récipients isolants ou des boîtiers.

40. Procédé de fabrication d'une pièce moulée (5a, 5b) à partir d'un composite selon l'une des revendications 6 à 34,
**caractérisé en ce que**
- des particules d'un polyalkylènetéréphtalate à l'état de mousse et/ou à l'état de pré-mousse avec un agent moussant, avec un taux bas de cristallite dans une phase amorphe, est amené dans un moule à une température faisant fondre la surface des particules qui sont alors reliées entre elles pour donner un corps moulé,
- après refroidissement le corps moulé est laminé sur une couche, telle qu'une couche de couverture (3),
- le corps moulé en mousse de particules, pendant son moulage et/ou le refroidissement, est recuit selon une courbe de température adaptée.

41. Procédé selon la revendication 40,
**caractérisé en ce que**
les particules, en présence d'une couche intermédiaire (4) contenant un polyalkylènetéréphtalate sont amenées à une température qui les fait fondre en surface et la couche intermédiaire (4) est mise en mousse par derrière, puis le composite obtenu est refroidi et la couche de couverture (3) est laminée sur la couche intermédiaire (3).

42. Procédé selon la revendication 40,
**caractérisé en ce qu'**
au moins une couche, telle qu'une couche de couverture, et des particules, compactées fortement, d'un polyalkylènetéréphtalate à l'état de mousse et/ou à l'état de pré-mousse avec un agent moussant, sont amenées dans un moule à une température les faisant fondre au moins en surface et la couche de couverture (3) est mise en mousse par l'arrière, puis le composite obtenu est refroidi, le corps moulé en mousse de particules, pendant sa fabrication et/ou son refroidissement étant recuit selon une courbe de température adaptée.

43. Procédé selon la revendication 42,
**caractérisé en ce qu'**
entre les particules et la couche de couverture (3) est placée une couche intermédiaire (4) et cette couche est soudée à la fois à la mousse de particules par mise en mousse de la couche à l'arrière, et à la couche de couverture (3).

44. Procédé selon la revendication 40,
**caractérisé en ce qu'**
une couche intermédiaire (4) ayant la forme d'une couche de fibres mélangées (2) dont une fraction est constituée par des fibres en polyalkylènetéréphtalate, en particulier en PET, tandis que l'autre est constituée par des fibres de renforcement offrant une mouillabilité suffisante à un polymère en phase liquide formant la couche de couverture, ainsi que des particules fortement compactées, d'un polyalkylènetérephtalate à l'état de mousse et/ou à l'état de pré-mousse avec un agent moussant sont, dans un moule, amenés à une température faisant fondre les particules en surface ainsi que les fibres en polyalkylènetéréphtalate de la couche de fibres mélangées, puis le composite obtenu est refroidi et, sur la surface libre de la couche de fibres mélangées, le polymère provenant de la phase liquide et qui se gélifie, se durcit et/ou se réticule, est déposé, le corps moulé en mousse de particules, pendant sa fabrication et/ou son refroidissement, étant recuit selon une courbe de température adatpée.

45. Procédé selon la revendication 44,
**caractérisé en ce que**
le polymère qui se gélifie, se durcit et/ou se réticule, est dans la phase liquide, mélangé avec des fibres de renforcement synthétiques et/ou naturelles, puis déposé sur la surface libre de la couche à fibres mélangées.

46. Procédé selon les revendications 44 et 45,
**caractérisé en ce que**
sur la face visible du polymère déposé à partir de la phase liquide, est déposée une couche décorative telle qu'une feuille, un textile ou similaire.

47. Procédé selon la revendication 46,
**caractérisé en ce que**
la couche décorative est déposée en même temps que le polymère sur la couche de fibres mélangées, par injection à l'arrière, pression à l'arrière ou similaire.

48. Procédé selon l'une quelconque des revendications 40 à 47,
**caractérisé en ce que**
les particules, en présence d'une couche support compacte (1), composée notamment d'au moins un polymère, sont amenées dans le moule à une température les faisant fondre au moins en surface, et la couche support (1) est amenée à l'état de mousse à l'arrière ou en périphérie.

49. Procédé selon l'une quelconque des revendications 40 à 48,
**caractérisé en ce que**
les particules et le cas échéant la couche de couverture (3) et/ou la couche intermédiaire (4) est (sont) amenée(s) à la température de fusion par l'intermédiaire d'une phase gazeuse chaude qui les pénètre par diffusion.

50. Procédé selon l'une quelconque des revendications 40 à 48,
**caractérisé en ce que**
les particules et le cas échéant la couche de couverture (3) et/ou la couche intermédiaire (4) et/ou la couche support (1) est(sont) amenée(s) à la température de fusion par de l'énergie fournie par des micro-ondes.

51. Procédé selon la revendication 50,
**caractérisé en ce qu'**
on utilise un milieu absorbant les micro-ondes.
